# EUROPÄISCHE PATENTANMELDUNG

(11) **EP 0 645 911 A2**
(43) Veröffentlichungstag der Anmeldung: **29.03.1995**
(21) Anmeldenummer: 94202672.5
(22) Anmeldetag: 16.09.1994
(51) Int. Cl.: H04L 12/24

(54) **Hierarchisches Kommunikationsnetz**

(30) Priorität: 17.09.1993 DE 4331618
(71) Anmelder: Philips Patentverwaltung GmbH, 22335 Hamburg (DE); PHILIPS ELECTRONICS N.V., 5621 BA Eindhoven (NL)
(72) Erfinder: Ebert, Siegfried, Dipl.-Ing., c/o Philips, D-20097 Hamburg (DE); Kasseckert, Rudolf, Dipl.-Ing., c/o Philips, D-20097 Hamburg (DE)
(74) Vertreter: Volmer, Georg, Dipl.-Ing.

(57) **Zusammenfassung**

Es wird ein ein hierarchisches Kommunikationsnetz - speziell eine Verwaltungsnetz - mit einem Kommunikationselement (2A bis 4C) beschrieben, dessen Einsatz unter anderem die Überwachung eines Übertragungsnetzes von zwei Betriebsstellen (1A,1B) aus ermöglicht. Die eingesetzten Kommunikationselemente (2A bis 4C) haben jeweils zwei Schnittstellen zur höheren Hierarchieebene hin und eine Schnittstelle für Anschlüße zu einer niederen Hierarchieebene. Die beiden Schnittstellen eines Kommunikationselementes (2A bis 4C) verfügen über je einen zugeordneten Port.
Varianten der Kommunikationselemente bestehen darin, daß mindestens zwei Schnittstellen ein gemeinsamer Port zugeordnet ist. Über jede dieser Schnittstellen ist eine Verbindung zu Kommunikationselementen einer niederen Hierarchieebene herstellbar.

Strukturen von Verwaltungsnetzen, die erst durch die angegebenen Kommunikationselemente möglich sind, werden erläutert.

## Beschreibung

Die Erfindung betrifft ein hierarchisches Kommunikationsnetz mit einem Kommunikationselement.

Ein Beispiel für ein hierarchisches Kommunikationsnetz ist ein Verwaltungsnetz. In der CCITT-Empfehlung M.30 ist der prinzipielle Aufbau eines Verwaltungsnetzes beschrieben. Die CCITT-Bezeichnung für ein derartiges Netz ist "Telecommunication Management Network", abgekürzt TMN.

Wichtige Bausteine des Verwaltungsnetzes sind Kommunikationselemente. Kommunikationselemente in der untersten Hierarchieebene eines solchen Netzes stellen das Bindeglied zwischen dem Verwaltungsnetz und dem zu verwaltenden und zu überwachenden Übertragungsnetz dar. Sie sammeln Daten über das Übertragungsnetz und geben diese z.B. bei Abfrage an Kommunikationselemente der nächst höheren Hierarchieebene weiter. Durch sie wird auch in das Übertragungsnetz eingegriffen, in dem sie Steuer- und Schaltbefehle z. B. für Ersatzschaltmaßnahmen weiterleiten. Ein Kommunikationselement der untersten Hierarchieebene wird in der Empfehlung M.30 "Network Element" (NE) und eines der anderen Ebenen "Mediation Device" (MD) genannt.

An der höchsten Hierarchieebene des Verwaltungsnetzes stehen Anzeige-, Entscheidungs- und Steuerstellen, die in der M.30 Empfehlung "Operations Systems" genannt und mit OS abgekürzt werden. Sie sollen im folgenden "Hauptbetriebsstellen" genannt werden.

In den Hauptbetriebsstellen werden sämtliche Daten des zu verwaltenden und zu überwachenden Netzes gesammelt und von Computern ausgewertet. Gegebenenfalls werden sofort auto matisch Hilfsmaßnahmen eingeleitet.

Konkretisierungen solcher Managementsysteme sind zum Beispiel in der DE 34 36 441 A1 und in einem Datenblatt der Philips Kommunikations Industrie AG (SISA Kommunikationsnetz für Netzmanagement, März 1991) beschrieben Kommunikationselemente nach dem Stand der Technik verfügen über jeweils einen Port in aufsteigender und absteigender Richtung. Jedem Port ist eindeutig eine physikalische Schnittstelle zugeordnet. Mit diesen Kommunikationelementen lassen sich keine Verbindungen in mehrere Richtungen aufbauen.

Der EP 05 37 821 ist zu entnehmen, welche konstruktiven Veränderungen an bis dahin bestehenden Netzmanagementsystemen vorzunehmen sind, damit auch die Überwachung von Linienstrukturen möglich wird. Inbesondere ist in der EP 05 37 821 vorgesehen, standardisierte Schnittstellen, über die Signale zu einer höheren oder niederen Hierarchieebene laufen, um einen steuerbaren Umschalter zu erweitern. Der steuerbare Umschalter ist in der abgehenden Leitung der Schnittstelle, bzw. in der abgehenden Leitung des zugehörigen Kommunikationselements angeordnet. In der Stellung "Senden" schließt er das Kommunikationselement an eine Sendeleitung an und unterbricht die Sendeleitung derart, daß alle nachfolgenden - gegen die Senderichtung gesehenen - Kommunikationselemente von der Sendeleitung abgetrennt sind. In der Stellung "Nicht senden" trennt der Umschalter das zugehörige Kommunikationselement von der Sendeleitung ab und hebt gleichzeitig die Unterbrechung der Sendeleitung auf.
Ist im folgenden von Schnittstellen die Rede, über die Signale zu einer höheren oder niederen Hierarchieebene laufen, so sind Schnittstellen gemeint, die um den oben beschriebenen Umschalter erweitert sind.

Bei Übertragungsnetzen in dünnbesiedelten Flächenstaaten, aber auch bei Übertragungsnetzen von Eisenbahnen oder von Energieversorungsunternehmen, die vorwiegend linienförmig ausgebildet sind, besteht die Anforderung, das Übertragungsnetz unabhängig von zwei Hauptbetriebsstellen aus zu verwalten.

Der Erfindung liegt die Aufgabe zugrunde, ein Kommunikationsnetz - speziell ein Verwaltungsnetz anzugeben, das eine solche Verwaltung kostengünstig ermöglicht. Eine weitere Aufgabe besteht darin, neue Strukturen von Kommunikationsnetzen speziell Managementsystemen aufzuzeigen, die sich durch hohe Betriebssicherheit auszeichnen.
Diese Aufgabe wird durch ein Kommunikationsnetz mit einem Kommunikationselement gelöst, bei dem über mindestens zwei Schnittstellen mit jeweils einem zugeordneten Port je eine Verbindung zu Kommunikationselementen einer höheren Hierarchieebene herstellbar ist.
Eine weitere Lösung besteht aus einem Kommunikationsnetz mit einem Kommunikationselement, bei dem über mindestens zwei Schnittstellen mit einem gemeinsamen Port je eine Verbindung zu Kommunikationselementen einer niederen Hierarchieebene herstellbar ist.
Eine dritte Lösung besteht aus der Kombination aller Merkmale der ersten beiden Lösungen.
Eine vorteilhafte Ausgestaltung der Kommunikationselemente besteht darin, daß diejenigen Schnittstellen untereinander konstruktiv und funktionell übereinstimmen, über die eine Verbindung zu Kommunikationselementen der gleichen Hierarchieebene herstellbar ist.

Mit diesen Kommunikationselementen läßt sich ein Kommunikationsnetz mit hoher Betriebssicherheit aufbauen, weil mindesten zwei voneinander unabhängige Verbindungen zwischen Kommunikationselementen zweier unterschiedlicher Hierarchieebenen bestehen.

Anhand der Figuren soll die Erfindung nun näher erläutert werden. Es zeigen
- Fig.1: ein erfindungsgemäßes Kommunikationslement,
- Fig.2: eine erste Struktur eines Verwaltungsnetzes mit erfindungsgemäßen Kommunikationelementen und
- Fig.3: eine weitere Struktur eines Verwaltungsnetzes.

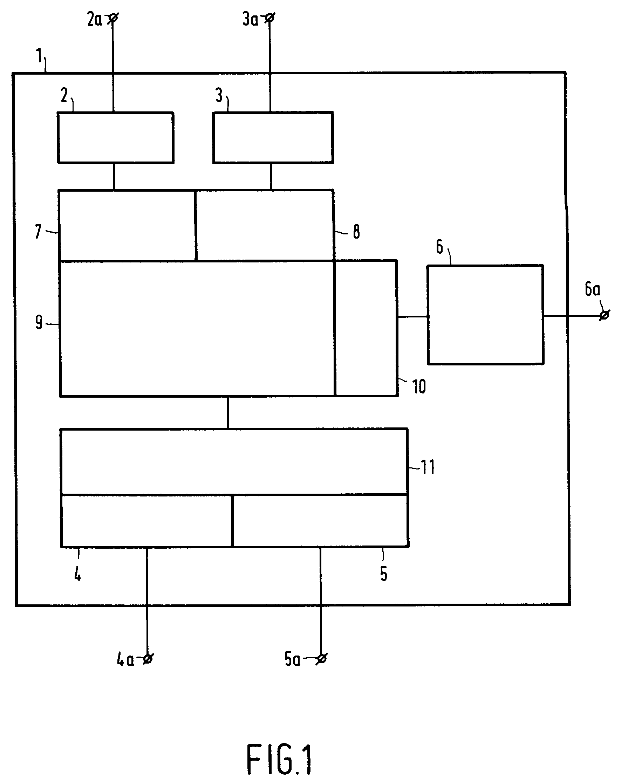

Das Kommunikationselement 1 im Beispiel nach Figur 1 ist über fünf Schnittstellen 2, 3, 4, 5 und 6 mit seiner Umgebung verbunden. Die Schnittstellen 2, 3, 4 und 5 sind QD2-Schnittstellen und die Schnittstelle 6 ist eine V.24-Schnittstelle. Über die Schnittstellen 2 und 3 ist das Kommunikationselement 1 mit Bausteinen einer höheren Hierarchieebene des Verwaltungsnetzes verbunden und über die Schnittstellen 4 und 5 mit Bausteinen einer niederen Hierarchieebene. Über die Schnittstelle 6 besteht eine Verbindung mit einem nicht gezeigten Personal-Computer.

Zentrale Funktionseinheit des Kommunikationselements 1 ist ein Vermittlungsrechner (in M.30 OSI 3 genannt) 9. Er analysiert ankommende Telegramme, die im sogenannten Telegrammkopf die Adressen jener Bausteine des Verwaltungsnetzes enthalten, für die der nachfolgende Inhalt des Telegramms bestimmt ist. Die Adressen im Telegrammkopf - die Zieladressen - können auch die Adressen von Zwischenstationen (z.B. die Adressen von Ports) enthalten, über die das Telegramm laufen soll, bevor es sein endgültiges Ziel erreicht hat. Die Zielangaben sind jedenfalls so eindeutig (vgl. hierzu die CCITT-Empfehlung M.30), daß der Vermittlungsrechner entscheiden kann, über welchen seiner Ports 7, 8, 10 oder 11 ein ankommendes Telegramms weitergeschickt werden soll. Dabei ist nicht ausgeschlossen, daß ein Telegramm über mehrere Ports gleichzeitig weitergegeben werden muß.

Steht fest, welche Adresse das nächste Ziel eines Telegramms hat, wird diese Adresse als Quelladresse an das Telegrammende angehängt, damit sich gegebenenfalls der Weg rekonstruieren läßt, über den das Telegramm zu seinem Endziel gelangt ist.

Nach Einlauf eines Telegramms bestimmt - wie oben schon angedeutet - der Vermittlungrechner 9 als nächste Zieladresse die Adresse eines oder mehrerer seiner Ports 7, 8, 10 oder 11. In sogenannten Warteschlangen, die den Ports zugeordnet sind, werden die Telegramme zwischengespeichert. Da zu den Ports 7, 8 und 10 jeweils eine Schnittstelle gehört, steht mit der Port-Adresse auch fest, über welchen der Anschlüsse 2a, 3a und 6a ein abgehendes Telegramm laufen wird, bzw. über welchen dieser Anschlüsse ein ankommendes Telegramm gelaufen ist.

Anders verhält es sich mit dem adressierbaren Port 11 zu einer niederen Hierarchieebene des Verwaltungsnetzes. An diesen Port sind die beiden Schnittstellen 4 und 5 angeschlossen. Abgehende Telegramme werden ohne zusätzliche Angaben sowohl über die Schnittstelle 4 als auch über die Schnittstelle 5 geleitet, d. h. sie laufen sowohl über den Anschluß 4a als auch in identischer Form über den Anschluß 5a.

Bei ankommenden Telegrammen kann der Vermittlungsrechner 9 nicht erkennen, ob ein Telegramm über den Anschluß 4a oder über den Anschluß 5a gelaufen ist.

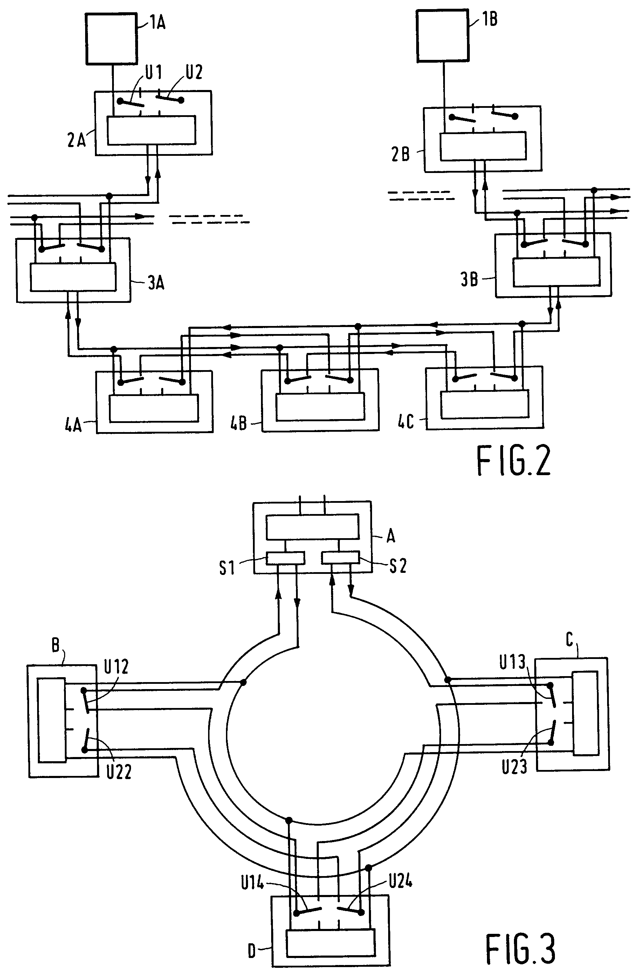

Figur 2 zeigt die Prinzipschaltung eines Verwaltungsnetzes, mit dem ein Übertragungsnetz von zwei Hauptbetriebsstellen 1A und 1B aus verwaltet wird. Die eingesetzten Kommunikationselemente 2A bis 4C haben jeweils zwei Schnittstellen zur höheren Hierarchieebene hin und eine Schnittstelle für Anschlüße zu einer niederen Hierarchieebene. Da im gezeigten Ausführungsbeispiel die Überwachung eines linienförmigen Übertragungsnetzes vorgesehen ist, sind auch die oben erwähnten steuerbaren Umschalter explizit eingetragen, da erst diese eine Überwachung von Linienstrukturen ermöglichen (vergleiche hierzu die EP 0 537 821).

Der Übersicht halber sind nur die Umschalter U1 und U2 mit Bezugszeichen versehen. Die Stellung der eingetragenen Umschalter ist ihre Ruhestellung. Die Kommunikationselemente 4A, 4B und 4C können sowohl über das (übergeordnete) Kommunikationselement 3A als auch über das (übergeordnete) Kommunikationselement 3B angesprochen werden. Damit sind sie auch über die Kommunikationelemente 2A und 2B von beiden Hauptberiebsstellen 1A und 1B aus ansprechbar.
Aus der Richtung der Hauptbetriebsstellen 1A und 1B gesehen, ist ab einer bestimmten Hierarchieebene - im Beispiel die Ebene, in der die Kommunikationselement 4A, 4B und 4C liegen - jedes Kommunikationselement von jeder Hauptbetriebsstelle 1A und 1B aus zu erreichen, und zwar ohne jede Einschränkung. Die Kommunikation mit der Hauptbetriebsstelle 1A und ihren erreichbaren Kommunikationselementen läuft über die erste Schnittstelle (Schnittstelle 2 nach Figur 1) der Kommunikationselemente und die Kommunikation mit der Hauptbetriebsstelle 1B und ihren erreichbaren Kommunikationselementen über die zweite Schnittstelle (Schnittstelle 3 nach Figur 1). Spontane Information aus Kommunikationselementen unterhalb der Kommunikationelemente 4A bis 4C werden von den zugehörigen Vermittlungsrechnern 9 (Fig.1) an beide Ports 7, 8 (Fig.1) vermittelt und gelangen so zu beiden Hauptbetriebsstellen 1A und 1B.

Für keine der Hauptbetriebsstellen wird die Vermittlungsinformation von und zum Network Element (NE) geändert. Selbst die Konfigurierung kann für beide gleich sein, so daß ein Informationsaustausch zwischen den Betriebsstellen im Falle einer Störung mit einem Minimum an Möglichkeiten für Mißverständnisse durchführbar ist. Die doppelte Auslegung des gesamten TM-Netzes wird durch Kommunikationselemente nach Figur 1 vermieden.

Eine Struktur nach Figur 2 zeichnet sich auch durch hohe Betriebssicherheit aus. Wird zum Beispiel die Leitung des TM-Netzwerkes zwischen den Kommunikationselementen 4B und 4C unterbrochen, so bleibt die Funktionsfähigkeit des gesamten TM-Netzes dennoch erhalten, wobei der Informationsaustausch mit dem Kommunikationselement 4C und der Hauptbetriebsstelle 1B weitergeführt werden kann. Entsprechendes gilt für die Kommunikationselemente 4A und 4B sowie für die Hauptbetriebsstelle 1A.

Der Betriebssicherheit dient auch die Ringstruktur nach Fig. 3. Diese Struktur enthält drei Kommunikationselemente B, C und D, von denen jedes zwei Schnittstellen zu einer höheren Hierarchieebene enhält und ein Kommunikationselement A mit zwei Schnittstellen zu einer niederen Hierarchieebene. Da die Umschalter der Schnittstellen für die Kommunikationselemente B, C, und D von entscheidender Wichtigkeit sind, sind sie wiederum explizit eingezeichnet, und zwar in ihrer Ruhestellung. Bei allen anderen Schnittstellen sind die Umschalter in eine Stellung gebracht, in der kein funktioneller Unterschied zwischen einer Schnittselle mit oder ohne Umschalter besteht; die sind deshalb nicht eingezeichnet.

Wie die Figur 3 zeigt, sind die Kommunikationselemente B, C und D über ihre erste Schnittstelle - von der nur der zugehörige Umschalter U12, U13 und U14 gezeigt ist - mit der ersten Schnittstelle S1 des Kommunikationselements A verbunden. Entsprechendes gilt für die zweite Schnittstelle der Kommunikationselemente B, C und D mit Umschaltern U22, U23 und U24 und der zweiten Schnittstelle S2 des Kommunikationselementes A. Der Informationsaustausch des Kommunikationselementes A mit den Kommunikationselementen B, C und D kann also über zwei unabhängige Wege erfolgen; daher bleibt das TM-Netz auch dann voll funktionsfähig, wenn einer dieser Kommunikationswege wegen eines Defektes ausfällt. Auch hier ist die gesammte Verdopplung des TM-Netzes nicht erforderlich, um eine hohe Betriebssicherheit zu gewährleisten.

## Patentansprüche

1. Hierarchisches Kommunikationsnetz mit einem Kommunikationselement,
dadurch gekennzeichnet,
daß das Kommunikationselement mindestens zwei Schnittstellen (2,3) mit jeweils einem zugeordneten Port (7,8) enthält, über die je eine Verbindung zu Kommunikationselementen einer höheren Hierarchieebene herstellbar ist.

2. Hierarchisches Kommunikationsnetz mit einem Kommunikationselement,
dadurch gekennzeichnet,
daß das Kommunikationselement mindestens zwei Schnittstellen (4,5) mit einem gemeinsamen Port (11) enhält, über die je eine Verbindung zu Kommunikationselementen einer niederen Hierarchieebene herstellbar ist.

3. Hierarchisches Kommunikationsnetz mit einem Kommunikationselement nach Anspruch 1,
dadurch gekennzeichnet,
daß das Kommunikationselement mindestens zwei Schnittstellen (4,5) mit einem gemeinsamen Port (11) enhält, über die je eine Verbindung zu Kommunikationselementen einer niederen Hierarchieebene herstellbar ist.

4. Kommunikationsnetz nach Anspruch 1, 2 oder 3,
dadurch gekennzeichnet,
daß diejenigen Schnittstellen des Kommunikationselementes untereinander konstruktiv und funktionell übereinstimmen, über die eine Verbindung zu Kommunikationselementen der gleichen Hierarchieebene herstellbar ist.

5. Hierarchisches Kommunikationsnetz mit Kommunikationselementen nach einem der Ansprüche 1, 2, 3 oder 4,
dadurch gekennzeichnet,
daß mindesten zwei voneinander unabhängige Verbindungen (Fig. 1 und Fig. 2) zwischen Kommunikationselementen zweier unterschiedlicher Hierarchieebenen bestehen.

6. Kommunikationselement für ein hierarchisches Kommunikationsnetz,
gekennzeichnet durch
mindestens zwei Schnittstellen (2,3) mit jeweils einem zugeordneten Port (7,8), über die je eine Verbindung zu Kommunikationselementen einer höheren Hierarchieebene herstellbar ist.

7. Kommunikationselement für ein hierarchisches Kommunikationsnetz,
gekennzeichnet durch
mindestens zwei Schnittstellen (4,5) mit einem gemeinsamen Port (11), über die je eine Verbindung zu Kommunikationselementen einer niederen Hierarchieebene herstellbar ist.

8. Kommunikationselement nach Anspruch 6,
gekennzeichnet durch
mindestens zwei Schnittstellen (4,5) mit einem gemeinsamen Port (11), über die je eine Verbindung zu Kommunikationselementen einer niederen Hierarchieebene herstellbar ist.

9. Kommunikationselement nach Anspruch 6, 7 oder 8,
dadurch gekennzeichnet,
daß diejenigen Schnittstellen untereinander konstruktiv und funktionell übereinstimmen, über die eine Verbindung zu Kommunikationselementen der gleichen Hierarchieebene herstellbar ist.
